Europäisches Patentamt

European Patent Office

Office européen des brevets

(19)

(11) Numéro de publication: **0 207 815 B1**

# FASCICULE DE BREVET EUROPEEN

(12)

(45) Date de publication de fascicule du brevet:
**10.04.91**

(51) Int. Cl.⁵: **B65B 55/18, A23L 3/10**

(21) Numéro de dépôt: **86400860.2**

(22) Date de dépôt: **22.04.86**

(54) **Procédé de stérilisation et d'emballage de produits alimentaires.**

(30) Priorité: **02.05.85 FR 8506643**

(43) Date de publication de la demande:
**07.01.87 Bulletin 87/02**

(45) Mention de la délivrance du brevet:
**10.04.91 Bulletin 91/15**

(84) Etats contractants désignés:
**AT BE CH DE FR GB IT LI LU NL SE**

(56) Documents cités:
**FR-A- 2 337 582**
**US-A- 3 615 713**

(73) Titulaire: **Bansard, Pierre Marcel**
**70 Avenue Foch**
**F-92260 Fontenay aux Roses(FR)**

(72) Inventeur: **Bansard, Pierre Marcel**
**70 Avenue Foch**
**F-92260 Fontenay aux Roses(FR)**

## Description

La présente invention se rapporte aux produits alimentair non céréaliers rendus stériles et non cuits par application d'un procédé thermique qui en permet une conservation de longue durée,

On connait les modes de conservation usuels des produits alimentaires par divers procédés:
- l'appertisation en boîtes ou en vrac,
- la surgélation/congélation,
- la semi-conservation avec réfrigération,
- la lyophilisation, deshydratation, irradiation, salage, fumage, acidification....

Tous ces procédés connus ont des contraintes inhérentes à leur spécificité:
- l'appertisation dénature la sapidité des produits qui sont nécessairement cuits à coeur et demande souvant loi parcellisation des produits,
- les produits surgelés sont tributaires de la chaîne de froid,
- les semi-conserves ont des durées de consommation réduites de quelques semaines,
- l'irradiation pose de délicats problèmes de radiolyse encore mal expliqués,
- les autres procédés sont marginaux.

Dans la technique de l'appertisation en vrac, on peut citer le brevet DE-A- 2738953 (FR-A- 2363288) qui décrit un systè complexe eau-vapeur de traitement de produits alimentaires coupés en petite morceaux (parcellisés).

Dans une variante d'application de ce procédé, un appareil comporte un autoclave recevant de la vapeur sous pression utilisée en tant que fluide caloporteur destiné a stériliser le produit à coeur.

Tous les procédés de ce genre avec traitement thermique connus de l'inventeur consistent à utiliser de l'eau ou de la vapeur non-saturée pour produire, selon des températures et durées déterminées par les "barèmes de stérrilisation", la stérilisation à coeur des produits qui doivent être nécessairement parcellisés.

L'invent propose un procédé dans lequel la stérilisation est effectuée avec de la vapeur saturée exempte d'air, et à une température d'au moins 121,1 °C et pendant un temps prédéterminé pour obtenir un état stérile pris dans le sens d'une décontamination au coeur du produit où le nombre de germes survivant est inférieur à $10^{-6}$ par $cm^3$, sans cuire le produit à coeur.La vapeur dans l'invention est utilisée pour ses propriétés bactéricides et non thermiques.

Le produit est suffisamment décontaminé a l'intérieur puisque déja bactériologiquement consommable en l'état, ce qui fait que le taux de probabilité de rencontrer $10^{-6}$ germes par $cm^3$ peut être pris en tant que référence de consommabilité dans laquelle on a un chance sur un million de rencontrer un produit contaminé à un taux supérieur à $10^{-6}$ germes.

Les produits traités selon l'invention ont un niveau bactérien de surface abaissé à un niveau optimal permettant la conservation de longue durée aprés mise sous emballage stérile scellé hermétiquement et leur consommation ultérieure peut être réalisée par leur cuisson proprement dite.

Il est rappelé que, de manière connue, tout tissus vivant végétal ou animal est constitué de cellules limitées à leur surface par un film de molécules dénommé membranes plasmiques

Les tissus résultent de l'agrégation des cellules voisines grâce à leur glycocalyx (cell-coat) à l'exclusion des cellules procaryotes (bactéries) qui existent normalement et seulement en surface des tissus par adhérence de leur glycocalyx ( voir: " Comment collent les bactéries dans", pour la science, Mars 78, J.W. COSTERTON. G.G. GEESEY. K.J. CHENG. ).

Le postulat selon lequel les tissus des produits alimentaires sont normalement stériles à l'intérieur a été mentionné pour la viande par J.ROSIER. V.CARLIER. F.BOLNOT dans "Base microbiologique de l'hygiène des aliments" Ecole Vétérinaire de Maison Alfort (France), ou il est indiqué pages 38... "que la contamination profonde de muscles doit être inexistante ou trés faible".

Si donc on soumet un produit alimentaire normalement stérile intérieurement à un traitement bactéricide de surface tel qu'avec de la vapeur saturée exempte d'air, on obtient un produit résultant totalement stèrile;le sens de stérile étant pris comme une décontamination poussée inférieure à $10^{-6}$ germes par $cm^3$ dans tout le produit.

On peut penser, en variante,aux produits conservés par salaison, dans lesquels le coeur est cru et la décontamination de surface a été assurée par phénomène osmotique des bactéries lysées.

L'état bactérien de paroi (surface) du produit alimentaire, qui peut être trés élevé tel que l'intérieur d'une crevette du genre gambas par exemple, est rendu stérile par effet de pénétration interne de la pression de la vapeur saturée.

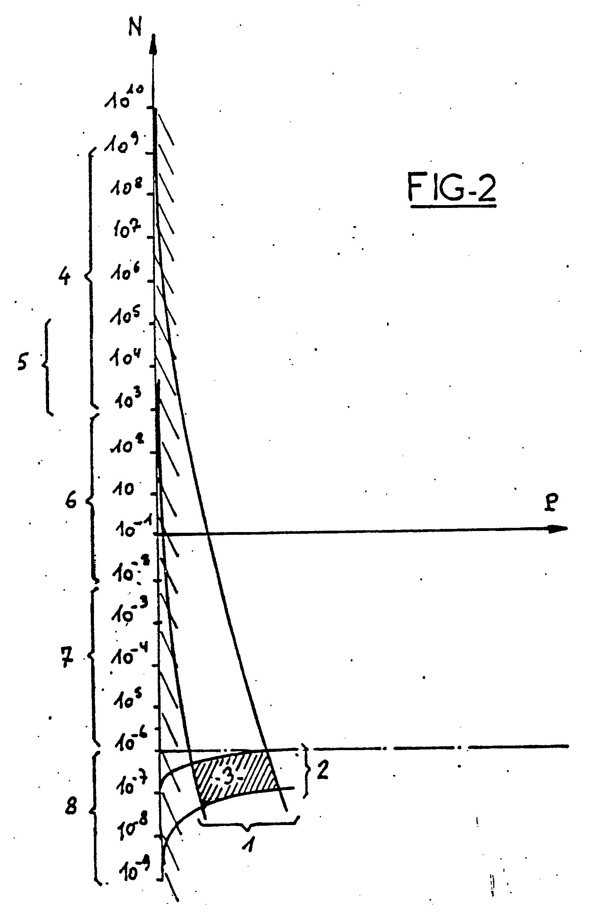

La figure 2 montre , à titre d'information, une échelle de contamination pouvant être rencontrée sur divers produits alimentaires :
4) flore de peau animale ($cm^2$),

2

5) carcasses animales (cm$^2$),

6) consommation humaine, produits frais (cm$^3$),

7) domaine d'appertisation (cm$^3$),

8) médicaments (ml).

Bien que l'effet de stérilisation selon l'invention ne soit appliqué que sur la surface du produit, il sera montré par la suite à travers des analyses bactériologiques, qu'aucune pollution rétrograde n'apparait de l'intérieur vers l'extérieur.

Le produit est cru intérieurement et cuit superficiellement sur une faible profondeur (quelques dixièmes de mm seulement).

D'une manière générale, les produits alimentaires sont cuits par des phénomènes physico-chimiques engendrés par un effet hydrothermique visant à les solubiliser.

Les produits secs doivent être hydratés préalablement ou concomitamment à l'effet thermique qui engendre des modifications structurelles de solubilisation connus.

Les produits normalement hydratés ont une structure tissulaire différente qui posent des problèmes particuliers:

- on peut consommer indifféramment de la viande crue ou cuite (à la tendreté près...)
- on ne peut consommer tous les végétaux crus (pommes de terre par exemple).

La chaleur transforme certains aliments,

Les viandes par exemple subissent entre 60 et 80°C un gonflement du collagène et une disposition de certaines liaisons thermolabiles entraînant la destruction progressive de l'édifice moléculaire. La solubilisation significative du collagène demande des températures supérieures à 80°C et des temps de chauffage longs supérieurs à une heure. ( Bernard Louis DUMONT, Pour la Science, juin 1986, Page 95 ).

Il est toujours possible, dans tous les cas, de définir dans un produit alimentaire, la zône cuite et la zône crue. F.LEURY rapporte dans " Techniques de la cuisine" P U F, 1972, qu'une pièce de boeuf (roti) mise dans un four préalablement chauffé, atteint une température de 55°C en surface après 10 minutes et 40°C au centre après 18 minutes; la différence de 15 °C étant liée à la conduction thermique du morceau choisi.

On peut affirmer que la cuisson en matière alimentaire a plus un caractère subjectif qu'objectif,aux impératifs digestifs près.

Les produits alimentaires traités par l'invention peuvent être de toute nature sous réserve de certaines denrees particulières (oeufs.....)

La stérilisation selon l'invention fait application de vapeur d'eau saturée (titre X = 1,notamment sur le diagramme de MOLLIER) qui a des propriétés particulières.

Lorsque le titre de vapeur n'a pas été formulé explicitement on peut considérer qu'il s'agit de mélange d'air et de vapeur d'eau qui n'a pas les mêmes propriétés que la vapeur d'eau exempte d'air et qui ne permet pas l'application du processus de stérilisation selon l'invention.

Cet impératif est bien connu dans les milieux biologiques et a été mentionné dans la littérature notamment à travers les travaux de IRVING.J.PFLUG ( voir par exemple: Pharmaceutical manufacturing, -August 1984).

D'autres documents peuvent également être cités et notamment : "validation of steam stérilisation cycles" de "Parentéral Drug Association " Technical monograph N°1.

La présence d'air dans la vapeur est un élément négatif dans le processus de stérilisation tel que cela résulte:

- du symposium international de la stérilisation industrielle de 1972 (Cf. Healt laboratory Sciences USA Vol 12 N°3),
- du document précité de PFLUG selon lequel la valeur D relevée en minutes sur la courbe, est fonction de l'humidité relative R H de la vapeur utilisée: généralement D égalant 1minute pour R H = 1.

Diverses réglements préconisent diverses valeurs de D (0,2-1-3 minutes) pour la température de référence de 121,1 °C.

Le processus de stérilisation appliqué est universellement défini par la valeur stérilisatrice "F" donnant un baréme de stérilisation appelé temps de réduction décimal D et qui est déterminé à une minute à 121,1 °C en vapeur saturée exempte d'air.

Un produit exposé à 121,1° (250°F) en vapeur saturée pendant une minute subit un effet stérilisant tel que sa contamination initiale est réduite de 90% ou que cette contamination décroit d'une puissance de dix.

Pour réduire d'autant de puissance de dix la contamination initiale d'un produit, il faut l'exposer d'autant de fois une minute à 121,1° C en vapeur saturée l'augmentation de la température réduisant la durée. Des réglementations régissent l'application de ces critères notamment les "directives Communautaires N°

77/99 du 21.12.76 relatives à la valeur stérilisatrice "F" pour les viandes appertisées et préconisant les valeurs de "D":

D = 0,21 minute CL. BOTULINUM

D = 1,00 minute SPORULES MESOPHILES

D = 3,00 minutes SPORULES THERMOPHILES

La valeur stérilisatrice "F" est donnée par:

$$F = D \log \frac{N°}{N} \quad \text{(en minutes à 121,1 °C)}$$

Ou N° est le nombre initial de spores

N est le nombre de spores survivant au chauffage.

A titre d'exemple: $D = 3 \ N° = 10^6 \ N = 10^{-6}$

$N°-N = 10^{12}$ soit 12 réductions décimales

"F" = $3 \times \log 10^6 \ 10^{-6}$ = 36 minutes

Un produit alimentaire crustacé du genre gambas a été soumis selon l'invention à l'action directe de la vapeur saturée pendant trois minutes puis a été disposé hermétiquement sous emballage étanche stérile.

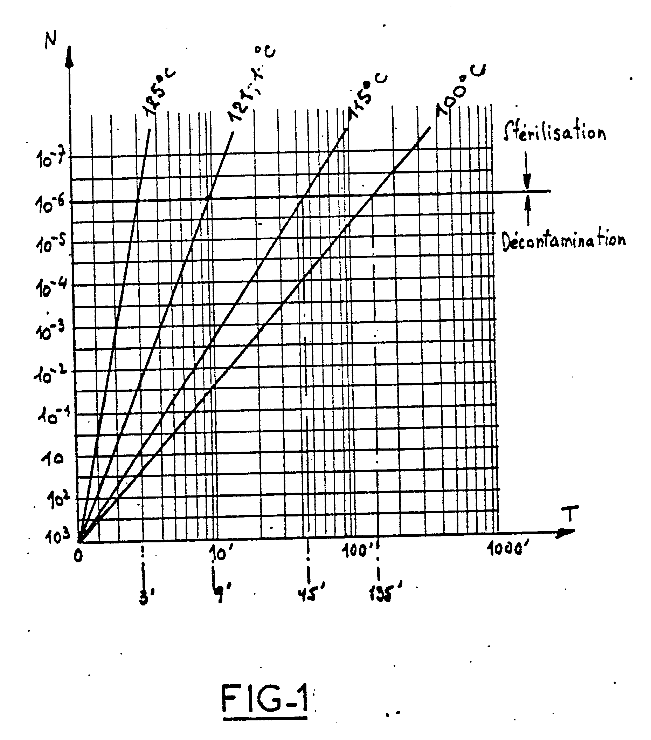

Comme l'on sait que, pour une valeur stérilisatrice donnée "F" on petit réduire le temps d'exposition en accroissant la température, on relève sur la figure 1 que la stérilisation de $10^3$ à $10^{-6}$ du produit concerné, a bien été obtenue à 125 °C avec trois minutes d'exposition seulement.

Les examens de laboratoire pratiqués quatre mois après traitement ont montré la stérilité du produit:

- SALMONELLA (N = Normalité = O) : Néant
- CHIGELLA (N = Normalité = 0) :Néant
- ESCHERICHIA COLI (N = Normalité inf. à 10 par gr. de produit : Néant,
- COLIFORMES (N = Normalité inf; à 1 000 par gr.de produit) : Néant,
- STAPHYLOCOQUES AUREUS ( N = Normalité inf. à 100 par gr. de produit) : Néant
- FLORE AEROBIE MESOPHILE (N = Normalité inf; a 300 000 germes par gr. de produit) : Néant.

Aucun germe pathogène n'a été trouvé.

Un autre échantillon de viande (veau) analysé dans les mêmes conditions a donné les mêmes résultats.

L'exposition du produit à la vapeur saturée exempte d'air a d'abord un effet surfaciel et l'on doit choisir une température et un temps d'exposition suffisants pour que le point de thermodestruction bactérienne soit atteint en profondeur.

La figure 2 indique que, si l'on a porté en abscisse (sans dimension) un point P fonction de la profondeur du produit vers le coeur et en ordonnées une échelle de contamination du produit selon des puissances de dix, on note que le réseau de courbes 1 est représentatif du degré de contamination du produit en profondeur qui va en général de quelques dixièmes de m m à environ 2 à 3 cm, que le réseau de courbes 2 est représentatif de l'effet thermique recherché en profondeur et résulte de l'application en surface de la vapeur saturée exempte d'air et ce en fonction ,d'une part de la durée et d'autre part de la température d'application sur le produit à traiter en fonction de sa conduction thermique.

Le croisement des nappes de courbes détermine une zône 3 d'applicabilité du procédé selon l'invention.

Les produits traités selon l'invention peuvent avantageusement être soumis à la vapeur saturée exempte d'air dans un autoclave à deux portes dont l'une débouche sur une zône stérile constituée d'une bulle souple étanche à air pressurisé stérile liée à l'autoclave et les moyens de traitement tels quel manipulation, scellement des emballaes de qualité alimentaire et évacuation des produits emballés, sont automatiques.

**Revendications**

1. Procédé de stérilisation et d'emballage de produits alimentaires consistant à:

a) disposer les produits dans un autoclave,

b) stériliser les produits à une température d'au moins 121.1 °G avec de la vapeur,

c) emballer les produits hermétiquement en milieu stérile sans rupture de la chaîne de stérilité, caractérisé en ce que

d) la stérilisation est effectuée avec de la vapeur saturée sans présence d'air, et

4

e) à une température et pendant un temps choisis pour obtenir un état de décontamination, au coeur du produit, dans lequel le nombre de germes survivant est inférieur à $10^{-6}$ par $cm^3$ , sans cuire le produit à coeur.

## Claims

1. Process of sterilization and packaging of food products except cereal plants consisting of :
   a) the setting out of the food products in an autoclave,
   b) the sterilization of the products with steam to a minimum temperature of 121.1 ° C,
   c) the packaging of the products hermetically in a sterile atmosphere without any break in the sterilization process. the main characteristics are :
   d) the sterilization is executed by means of saturated steam without the presence of air and
   e) to a selected temperature and during a given time in order to obtain a state of decontamination in the heart of the product, in which the number of surviving germs is inferior to $10^{-6}$ per $cm^3$, without cooking the product at its central point.

## Ansprüche

1. Sterilisierungs- und Verpackungsverfahren von Nahrungsmitteln mit Ausnahme von Getreidepflanzen besteht darin, dass :
   a) die Produkte sollen in einem Sterilisierapparat angeordnet werden,
   b) die Produkte sollen mit einer Temperatur von mindestens 121.1 ° C gedämpft und sterilisiert werden,
   c) sie sollen auch hermetisch in einer sterilen Atmosphäre ohne Unterbrechung des Sterilisierungs-Prozess verpackt werden. Die Merkmale sind folgende :
   d) die Sterilisierung wird mit gesättigtem Dampf ohne Luft durchgeführt und,
   e) um bei einer Temperatur und während einer festgelegten Zeit eine Dekontaminierung innerhalb des Produktes in dem die Zahl der nor Liegende Keime unter $10^{-6}$ pro $cm^3$ liegt, zu erhalten, ohne das Produkte vollständig zu kochen.

5

FIG-1

FIG-2